# EUROPÄISCHE PATENTANMELDUNG

(11) **EP 4 609 926 A1**
(43) Veröffentlichungstag der Anmeldung: **03.09.2025**
(21) Anmeldenummer: 24160958.5
(22) Anmeldetag: 01.03.2024
(51) Int. Cl.: A63C 17/14, B60T 11/00, B62K 5/08, A63C 17/01, A63C 17/02

(54) **BREMSSYSTEM FÜR EIN NICHT MOTORISIERTES FAHRZEUG**

(71) Anmelder: Sturgrint GmbH, 8907 Wettswil (CH)
(72) Erfinder: Kowalski, Arkadiusz, 8907 Wettswil (CH)
(74) Vertreter: Schaad, Balass, Menzl & Partner AG

(57) **Zusammenfassung**

Bremssystem für ein nicht motorisiertes Fahrzeug umfassend:
einen Hauptkörper umfassend eine Hauptkörperebene,
eine Schubvorrichtung, umfassend einen geführten Schubkörper,
ein erstes und ein zweites Gelenk,
wobei jedes Gelenk einen ersten Arm und einen zweiten Arm umfasst, und
wobei der erste Arm einerseits parallel zur Hauptkörperebene schwenkbar mit dem Hauptkörper verbunden ist und andererseits parallel zur Hauptkörperebene schwenkbar mit dem zweiten Arm verbunden ist, und der zweite Arm einerseits parallel zur Hauptkörperebene schwenkbar mit dem Schubkörper verbunden ist und andererseits parallel zur Hauptkörperebene schwenkbar mit dem ersten Arm verbunden ist,
eine erste Rolle, welche um eine in der Hauptkörperebene liegende erste Rollenachse drehbar gelagert ist und eine zweite Rolle, welche um eine in der Hauptkörperebene liegende zweite Rollenachse drehbar gelagert ist, wobei die erste Rollenachse mit dem ersten Arm des ersten Gelenks und die zweite Rollenachse mit dem ersten Arm des zweiten Gelenks verbunden ist, und
wobei die Rollenachsen durch eine Schubbewegung des Schubkörpers zwischen einer Freilaufposition und einer Bremsposition symmetrisch zueinander verschwenkbar sind.

## Beschreibung

Die Erfindung betrifft ein Bremssystem für ein nicht motorisiertes Fahrzeug und ein nicht motorisiertes Fahrzeug umfassend das erfindungsgemässe Bremssystem.

Bremssysteme spielen eine entscheidende Rolle in der Sicherheit und Steuerung von nicht motorisierten Fahrzeugen wie Longboards und Skateboards. In diesen Fortbewegungsmitteln, die durch die kraftvolle Bewegung des Fahrers oder Ausnutzung von Gravitation angetrieben werden, gewinnt die Bremsfunktionalität an besonderer Bedeutung. Eine effektive Bremse ermöglicht nicht nur eine präzise Kontrolle der Geschwindigkeit, sondern auch ein sicheres Manövrieren und Stoppen, insbesondere in unerwarteten Situationen und bei starkem Gefälle.

Traditionell wurden verschiedene Bremssysteme in Longboards und Skateboards integriert, wobei jedes System spezifische Vor- und Nachteile aufweist. Von Reibungsbremsen über Scheibenbremsen bis hin zu manuellen Methoden wie Foot-Braking - die Entwicklung von Bremssystemen hat sich im Laufe der Zeit weiterentwickelt, um den unterschiedlichen Anforderungen von Fahrern gerecht zu werden.

Trotz dieser Fortschritte stehen Bremssysteme in nicht motorisierten Fahrzeugen vor verschiedenen Herausforderungen, darunter begrenzter Platz für Bremskomponenten, Anpassung an unterschiedliche Geschwindigkeiten und Witterungsbedingungen sowie die Abnutzung von Verschleißteilen. In dieser dynamischen Umgebung ist die kontinuierliche Innovation und Optimierung von Bremssystemen von entscheidender Bedeutung, um die Sicherheit, Leistung und Zuverlässigkeit für Fahrer aller Erfahrungsstufen zu verbessern.

Die WO 2013170295 A1 offenbart ein Bremssystem für ein Longboard. Das Bremssystem verwendet eine Scheibenbremse, um das Longboard zu verlangsamen oder zum Stillstand zu bringen. Jedoch wurde festgestellt, dass diese Konstruktion aufgrund der begrenzten Platzverhältnisse und der erforderlichen kleineren Bremsscheibe im Vergleich zu den Rollen eine geringe Bremswirkung aufweist. Insbesondere bei höheren Geschwindigkeiten, die über die üblichen 20-30 km/h hinausgehen, erweist sich die herkömmliche Scheibenbremse als unzureichend, um eine zuverlässige Verzögerung zu gewährleisten. Dies liegt nicht nur an der begrenzten Größe der Bremsscheibe, sondern auch an der hohen Belastung, der sie durch die Drehzahl der Longboard-Räder ausgesetzt ist. Darüber hinaus führt die durch die Bremsung erzeugte Wärme zu einem Abfall der Bremsleistung, was die Sicherheit und Effektivität weiter beeinträchtigt. Ein weiterer Nachteil des Bremssystems mit einer Scheibenbremse ist, dass die Bremsscheibe als Verschleißteil fungiert. Diese Konstruktion erfordert einen zeitaufwändigen Austausch der Bremsscheibe, da diese einem erheblichen Verschleiß unterliegt. Ein weiterer Nachteil ist die beeinträchtigte Leistung der Bremsscheibe bei nassen Bedingungen. Bei regnerischem Wetter oder auf feuchten Untergründen erweist sich die herkömmliche Scheibenbremse als weniger effektiv. Dies resultiert aus der direkten Exposition der Bremsscheibe gegenüber Nässe, die während der Fahrt auf die Oberfläche trifft. Die nasse Bremsscheibe führt zu einem verringerten Reibungskoeffizienten zwischen Bremsbelägen und Scheibe, was die Bremswirkung weiter reduziert. Darüber hinaus kann die Nässe zu einem temporären Verlust der Bremsleistung führen, bis die Bremsscheibe durch Reibung und Erwärmung wieder getrocknet ist. Dieses Verhalten beeinträchtigt nicht nur die Sicherheit des Fahrers, sondern verschlechtert auch die allgemeine Effektivität der Bremsvorrichtung. Ein weiterer Nachteil einer Scheibenbremse ist, dass, wenn sie die Kraft aufbringen kann, welche das Rad zum Stillstand bringt, das Rad einen sogenannten Flat-Spot, auch Bremsplatten genannt, erhält, also eine flache Stelle im Rad. Ein Rad mit einem Flat-Spot muss ausgetauscht werden, da dieser bei der Fahrt zu starken Vibrationen führt, was das Handling des Fahrzeugs erschwert.

Die vorliegende Erfindung zielt darauf ab, diese bestehenden Mängel zu überwinden und eine Bremsvorrichtung für nicht motorisierte Fahrzeuge bereitzustellen, die sowohl die Bremswirkung als auch die Haltbarkeit verbessert, selbst unter Bedingungen hoher Geschwindigkeiten und Belastungen und die Bremsleistung unter nassen Bedingungen zu verbessern und eine konsistente Funktionalität in verschiedenen Umgebungen zu gewährleisten.

Die Erfindung betrifft ein Bremssystem für ein nicht motorisiertes Fahrzeug umfassend einen Hauptkörper mit einer Hauptkörperebene. Weiter umfasst das Bremssystem eine Schubvorrichtung mit einen geführten Schubkörper, ein erstes Gelenk und ein zweites Gelenk, wobei jedes Gelenk einen ersten Arm und einen zweiten Arm umfasst. Der erste Arm jedes Gelenks ist dabei einerseits parallel zur Hauptkörperebene schwenkbar mit dem Hauptkörper verbunden und andererseits parallel zur Hauptkörperebene schwenkbar mit dem zweiten Arm verbunden. Der zweite Arm jedes Gelenks ist dabei einerseits parallel zur Hauptkörperebene schwenkbar mit dem Schubkörper verbunden und andererseits parallel zur Hauptkörperebene schwenkbar mit dem ersten Arm verbunden. Das erfindungsgemässe Bremssystem umfasst weiter eine erste Rolle, welche um eine in der Hauptkörperebene liegende erste Rollenachse drehbar gelagert ist und eine zweite Rolle, welche um eine in der Hauptkörperebene liegende zweite Rollenachse drehbar gelagert ist, wobei die erste Rollenachse mit dem ersten Arm des ersten Gelenks und die zweite Rollenachse mit dem ersten Arm des zweiten Gelenks verbunden ist, wobei die Rollenachsen durch eine Schubbewegung des Schubkörpers zwischen einer Freilaufposition und einer Bremsposition symmetrisch zueinander verschwenkbar sind.

Im Kontext der Erfindung wird unter dem Begriff «Freilaufposition» eine Position des Schubkörpers definiert, in welcher sich die mit dem Schubkörper verbundenen und verschwenkbar gelagerten Rollenachsen im Wesentlichen rechtwinklig zur Fahrtrichtung orientiert sind, sodass keine Bremswirkung erzielt wird.

Das erfindungsgemässe Bremssystem hat den Vorteil, dass durch das symmetrische Verschwenken der Rollen, selbst bei hohen Geschwindigkeiten, eine zuverlässige und effektive Verzögerung, unabhängig von den Fahrumständen gewährleistet wird. Die starke Bremswirkung ermöglicht Fahrern die volle Kontrolle über ihre Geschwindigkeit, selbst bei steilen Abfahrten oder anspruchsvollen Geländebedingungen. Im erfindungsgemässen Bremssystem erfolgt die Bremswirkung durch einen gleichmässigen Abrieb der Rollen, wodurch die Entstehung eines Flat-Spots verhindert wird. Die Rollen sind somit zwar als Verschleissteile vorgesehen, müssen aber nicht bei jeder Vollbremsung gleich ersetzt werden. Das erfindungsgemässe Bremssystem hat somit den Vorteil, dass die beim Bremsvorgang verschlissenen Teile einfach auszutauschen, leicht zugänglich und kostengünstig sind. Weiter ist das erfindungsgemässe Bremssystem wartungsarm, da die Verschleissteile einfach zugänglich sind und das Bremssystem keine komplizierte wartungsintensive Mechanik umfasst. Ein weiterer Vorteil des erfindungsgemässen Bremssystems ist die Konfigurierbarkeit auf die zu bewältigende Strecke. Beispielsweise kann durch Wahl des Rollenmaterials die Bremswirkung verändert werden, was das System besonders flexibel und an die individuellen Bedürfnisse anpassbar macht. Insgesamt bietet dieses Bremssystem eine einzigartige Kombination aus Leistung, Wirtschaftlichkeit und Anpassungsfähigkeit.

In einer bevorzugten Ausführungsform verschwenken die Rollenachsen des Bremssystems in Fahrtrichtung. In der Freilaufposition sind die Rollen im Wesentlichen senkrecht zur Fahrtrichtung orientiert, sodass kein zusätzlicher Rollwiderstand generiert wird. Aus dieser Freilaufposition können die Rollen nun entweder in Fahrtrichtung, also in Fahrtrichtung nach vorne oder entgegen der Fahrtrichtung, also in Fahrtrichtung nach hinten verschwenken. Wenn die Rollen in Fahrtrichtung nach vorne verschwenken, bilden die beiden Rollenachsen ein in Fahrtrichtung orientiertes «V». Wenn die Rollen entgegen der Fahrtrichtung also in Fahrtrichtung nach hinten verschwenken bilden sie ein «Pflug» ähnlich der Bremstechnik beim Skifahren. Beide Verschwenkpositionen haben eine Bremswirkung, da der Rollwiederstand der Rollen erhöht wird, was zur Abnützung der Rollen führt. Die Verschwenkpositionen in Fahrtrichtung in die Bremsposition ist bevorzugt, da aus dieser die Rollen selbstständig ohne äusseren Einfluss wieder in die Freilaufposition verschwenken, indem sie dem Weg des geringsten Widerstands folgen, falls keine weitere externe Kraft auf sie wirkt.

In einer bevorzugten Ausführungsform handelt es sich bei der Schubbewegung des Schubkörpers um eine manuelle Schubbewegung. Unter einer manuellen Schubbewegung wird im Sinne der Erfindung eine Schubbewegung verstanden, welche nicht motorisiert ist. Da das Bremssystem in nicht-motorisierten Fahrzeugen eingebaut werden soll, müsste für eine motorisierte Auslösung des Bremssystems extra ein Motor eingebaut werden. Aufgrund der häufig begrenzten Platzverhältnisse in solchen Fahrzeugen ist daher eine manuelle, also nicht-motorisierte Auslösung des Bremssystems bevorzugt.

Bevorzugt umfasst das Bremssystem eine Linearführung, welche mit dem Hauptkörper verbunden ist und an welchem der Schubkörper geführt wird. Als Alternative könnte der Schubkörper auch an einer Zahnstange geführt sein. Beide Ausführungsformen haben den Vorteil, dass der Schubkörper kontrollierter geführt werden kann und somit die Bremswirkung besser dosiert und präziser eingesetzt werden kann.

Bevorzugt umfasst das Bremssystem weiter ein Zugseil, welches besonders bevorzugt über eine Übersetzung, mit dem Schubkörper verbunden ist, wobei der Schubkörper mit dem Zugseil aus der Freilaufposition in die Bremsposition bewegbar ist. Mit dem übersetzten Zugseil lässt sich die Bremswirkung ideal regulieren, ohne dass dabei das Bremssystem seine kompakte Bauweise einbüsst. Das bevorzugte Bremssystem umfasst dabei rein mechanische Bauteile und die Bremswirkung wird ebenfalls mechanisch bzw. manuell durch den Fahrer reguliert. Eine solche Bauweise spart im Vergleich zu einem elektrisch regulierten Bremssystem Platz und Produktionskosten. Als Alternative kann das Zugseil auch durch einen Hebel ersetzt werden, welcher das Verschwenken der Rollen kontrolliert.

In einer bevorzugten Ausführungsform umfasst das Bremssystem weiter einen Rahmen, der den geführten Schubkörper umschliesst, wobei der Schubkörper eine Sicherungsvorrichtung umfasst, welcher in einer Fixierstellung den Schubkörper in der Freilaufposition lösbar im Rahmen fixiert. Alternativ kann der Rahmen auch ein Teil des Hauptkörpers sein. Die Sicherungsvorrichtung verhindert das der Schubkörper die Rollen verschwenkt, solange sich der Schubkörper in der Fixierstellung befindet. Der Vorteil der Sicherungsvorrichtung ist, dass die Rollen nicht ungewollt aus der Freilaufposition in die Bremsposition verschwenken, beispielsweise bei einer Fahrt über eine unebene Fläche. Damit kann der Fahrer sich auf die vor ihm liegende Strecke konzentrieren und muss nicht erwarten, dass die Rollen bei unebener Oberfläche zwischendurch in die Bremsposition verschwenken und er allenfalls durch die ruckartige Bremswirkung die Kontrolle über sein Fahrzeug verliert.

Bevorzugt umfasst die Sicherungsvorrichtung mindestens einen Greifer, welcher in der Fixierstellung in den Rahmen eingreift. Alternativ zum Greifer könnte die Sicherungsvorrichtung auch einen gefederten Pin, welcher in ein Loch einrastet, ein Stoppkeil oder ein asymmetrisches Zahnrad aufweisen, welche die Sicherungsvorrichtung fixieren.

Der Greifer hat gegenüber den erwähnten alternativen Konstruktionen den Vorteil, dass er ein einfaches mechanisches Bauteil ist, das wartungsarm ist und zuverlässig funktioniert.

In einer bevorzugten Ausführungsform greift der Greifer der Sicherungsvorrichtung in eine Ausnehmung des Rahmens oder des Hauptkörpers ein. Durch das Eingreifen in eine Ausnehmung wird die Zuverlässigkeit der Sicherungsvorrichtung erhöht und eine ungewollte Auslösung des Bremssystems verhindert.

Bevorzugt ist der Greifer mittels einer Greifer-Zugfeder in der Fixierstellung vorgespannt. Der Vorteil der vorgespannten Greifer-Zugfeder ist, dass die Spannung, durch die durch den Fahrer bei der Bremswirkung aufgebrachte Kraft erhöht wird und wenn der Bremsvorhang abgeschlossen ist, die Greifer-Zugfeder den Greifer automatisch wieder in die Fixerstellung bringt, ohne dass der Fahrer dazu etwas beitragen muss.

In einer bevorzugten Ausführungsform umfasst Sicherungsvorrichtung zwei Greifer, wodurch die Zuverlässigkeit der Sicherungsvorrichtung erhöht, und eine ungewollte Auslösung des Bremssystems verhindert wird.

Bevorzugt umfasst das Bremssystem weiter mindestens eine Schubkörper-Zugfeder, welche den Schubkörper in der Freilaufposition vorspannt. Der Vorteil der vorgespannten Schubkörper-Zugfeder ist, dass die Spannung, durch die durch den Fahrer bei der Bremswirkung aufgebrachte Kraft erhöht wird und wenn der Bremsvorhang abgeschlossen ist, die Schubkörper-Zugfeder den Schubkörper automatisch wieder in die Freilaufposition bringt, ohne dass der Fahrer dazu etwas beitragen muss.

In einer bevorzugten Ausführungsform umfasst der Rahmen eine Querstrebe, welche einen Anschlag für den Schubkörper definiert, sodass die Rollen aus der Freilaufposition in die Bremsposition, um einen Schwenkwinkel von 5 - 85°, bevorzugt 30 - 60°, besonders bevorzugt 40 - 50° verschwenkbar sind. Überraschenderweise wurde festgestellt, dass schon ein geringer Schwenkwinkel von 5° eine Bremswirkung erzielt, wobei die Bremswirkung mit zunehmendem Schwenkwinkel ebenfalls zunimmt. Wenn die Rollen in einem Schwenkwinkel zwischen 40 - 50° verschwenkt werden, kann ein ideales Verhältnis von Bremswirkung und Haltbarkeit der Rollen erzielt werden.

In einer bevorzugten Ausführungsform des Bremssystems ist die Orientierung der Rollenachse im Vergleich zur Orientierung des ersten Arms fixiert. Somit wird eine Bewegung des ersten Arms direkt auf die am ersten Arm fixierte Rollenachse übertragen, wodurch sich die Bremswirkung kontrollierter steuern lässt.

In einer bevorzugten Ausführungsform des Bremssystems weisen der erste und der zweite Arm des ersten und des zweiten Gelenks, jeweils ein erstes und ein zweites Ende auf, wobei das erste Ende des ersten Arms mit dem Hauptkörper verbunden ist und das zweite Ende des ersten Arms mit dem ersten Ende des zweiten Arms verbunden ist und das zweite Ende des zweiten Arms mit dem Schubkörper verbunden ist. Durch diese Bauweise kann ein kompaktes Bremssystem konstruiert werden, welches in Fahrzeugen mit limitierten Platzverhältnissen wie Longboards verwendet werden kann.

In einer bevorzugten Ausführungsform des Bremssystems sind die Rollen aus einem Vollmaterial hergestellt. Da das Bremssystem durch Abrieb der Rollen eine Bremswirkung erzielt, ist es erwünscht, dass möglichst viel Rollenmaterial für die Bremsung zur Verfügung steht. Daher sind Rollen aus einem Vollmaterial gegenüber einem mit Luft gefüllten Reifen bevorzugt. Bevorzugt sind die Rollen aus Polyurethan oder Kautschuk hergestellt. Besonders bevorzugt sind die Rollen aus Polyurethan hergestellt. Rollen aus Kautschuk bieten einen guten Grip wegen der hohen Haftreibung, was jedoch mit einem hohen Rollwiderstand einhergeht. Im Kontrast dazu haben Rollen aus Polyurethan im Vergleich zu Rollen aus Kautschuk eine niedrigere Haftreibung und daher auch einen niedrigeren Rollwiderstand. Abhängig von der Beschaffenheit der Strecke kann somit das Fahrzeug sehr einfach auf die bevorstehende Fahrt eingestellt werden.

Ein weiterer Aspekt der Erfindung umfasst ein nicht-motorisiertes Fahrzeug umfassend ein erfindungsgemässes Bremssystem. Bevorzugt ist das nicht-motorisiertes Fahrzeug ausgewählt aus der Gruppe bestehend aus Kickboard, Skateboard, Pedal-Gokart, Snakeboard, Longboard, Streetluge 3-rädrige Scooter und Buttboard. Alle beschriebenen nicht-motorisierten Fahrzeugen bedürfen ein Bremssystem mit kompakter Bauweise, welche Geschwindigkeiten von 30km/h und mehr reduzieren kann.

Besonders bevorzugt ist das nicht-motorisierte Fahrzeug ausgewählt aus der Gruppe bestehend aus Longboard, Streetluge und Buttboard, da auf diesen das Bremssystem auf die Aufnahme einer Standartachse montiert werden kann, wobei diese Standartachse anschliessend auf Longboard, Streetluge und Buttboard montiert werden kann.

Im Folgenden wird die Erfindung anhand einiger in den Figuren dargestellten Ausführungsbeispiele näher erläutert. Wenn alternative Ausführungsformen sich nur in einzelnen Merkmalen unterscheiden, wurden für die gleichbleibenden Merkmale jeweils dieselben Bezugszeichen verwendet. Es zeigen jeweils rein schematisch:
- Fig. 1: eine Draufsicht einer bevorzugten Ausführungsform eines Bremssystems in Bremsposition;
- Fig. 2: eine Draufsicht einer bevorzugten Ausführungsform eines Bremssystems in Freilaufposition;
- Fig. 3: eine Draufsicht einer bevorzugten Ausführungsform einer Sicherungsvorrichtung;
- Fig 4.: eine perspektivische Ansicht einer bevorzugten Ausführungsform eines auseinandergebauten Bremssystems.

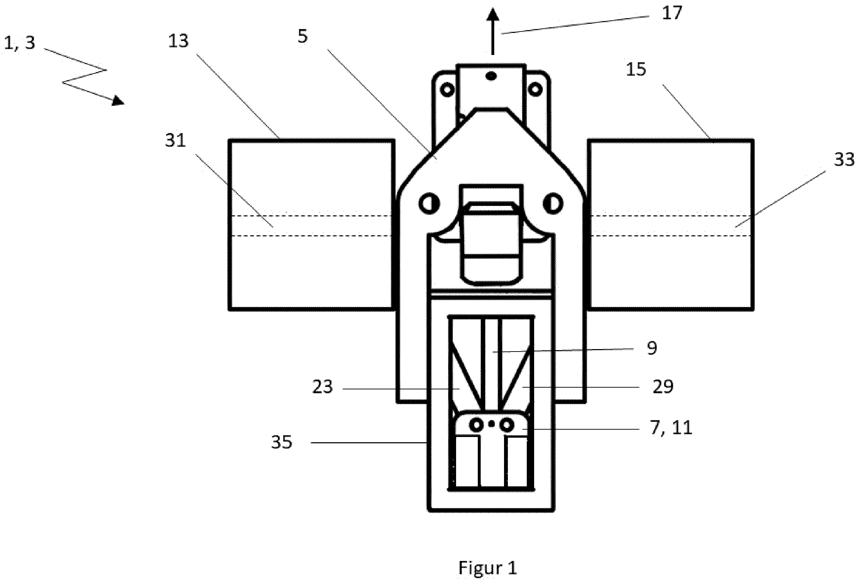

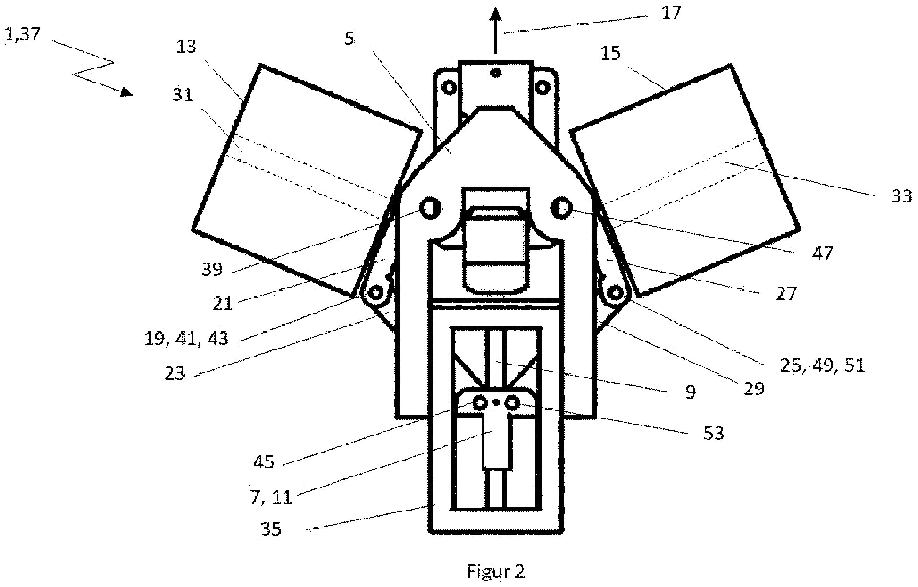

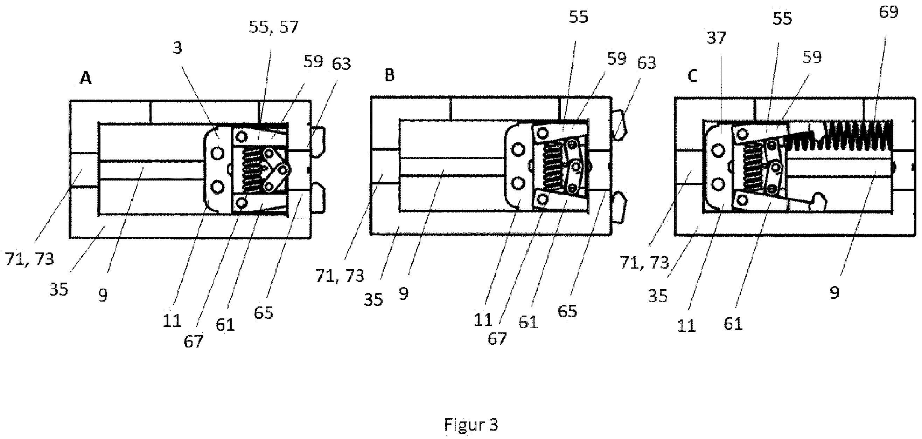

Figur 1 zeigt eine bevorzugte Ausführungsform eines Bremssystems 1 in einer Freilaufposition 3 mit einem Hauptkörper 5, welcher in einer Hauptkörperebene liegt. Das Bremssystem 1 umfasst weiter eine Schubvorrichtung 7 mit einem an einer Linearführung 9 geführten Schubkörper 11, eine erste Rolle 13 und eine zweite Rolle 15, welche in der Hauptkörperebene senkrecht zur Fahrtrichtung 17 orientiert sind, sowie ein erstes Gelenk 19 mit einem ersten Arm 21 und einem zweiten Arm 23 und ein zweites Gelenk 25 mit einem ersten Arm 27 und einem zweiten Arm 29 (siehe Figur 2 und 3). Die erste Rolle 13 ist um eine erste Rollenachse 31 drehbar gelagert, wobei die erste Rollenachse 31 mit dem ersten Arm 21 des ersten Gelenks 19 verbunden ist. Die zweite Rolle 15 ist um eine zweite Rollenachse 33 drehbar gelagert, wobei die zweite Rollenachse 33 mit dem ersten Arm 27 des zweiten Gelenks 25 verbunden ist (siehe Figur 2). Das Bremssystem 1 umfasst weiter einen Rahmen 35, welcher mit dem Hauptkörper 5 verbunden ist.

Figur 2 zeigt eine bevorzugte Ausführungsform eines Bremssystems 1 in einer Bremsposition 37, wobei die beiden Rollenachsen 31, 33 in der Hauptkörperebene in Fahrtrichtung 17 nach vorne verschwenkt werden, um eine Bremswirkung zu erzielen. Die Rollenachsen 31, 33 sind hier in einem Winkel von 22.5 Grad verschwenkt, was eine gute Bremswirkung erzielt.

In Figur 2 ist ersichtlich, wie die beiden Gelenke 19, 25 konstruiert sind. Das erste Gelenk 19 umfasst den ersten Arm 21 mit einem ersten Ende 39 und einem zweiten Ende 41 und den zweiten Arm 23 mit einem ersten Ende 43 und einem zweiten Ende 45. Das erste Ende 39 des ersten Arms 21 ist mit dem Hauptkörper 5 schwenkbar verbunden, das zweite Ende 41 des ersten Arms 21 ist mit dem ersten Ende 43 des zweiten Arms 23 schwenkbar verbunden und das zweite Ende 45 des zweiten Arms 23 ist mit dem Schubkörper 11 schwenkbar verbunden. Das zweite Gelenk 25 umfasst den ersten Arm 27 mit einem ersten Ende 47 und einem zweiten Ende 49 und den zweiten Arm 29 mit einem ersten Ende 51 und einem zweiten Ende 53. Das erste Ende 47 des ersten Arms 27 ist mit dem Hauptkörper 5 schwenkbar verbunden, das zweite Ende 49 des ersten Arms 27 ist mit dem ersten Ende 51 des zweiten Arms 29 schwenkbar verbunden und das zweite Ende 53 des zweiten Arms 29 ist mit dem Schubkörper 11 schwenkbar verbunden. Das Verschwenken der Rollenachsen 31, 33 und somit der Rollen 13, 15 wird ausgelöst, indem der Schubkörper 11 der Schubvorrichtung 7 entlang der Linearführung 9 in Fahrtrichtung 17 verschoben wird.

Die Figur 3 zeigt eine bevorzugte Ausführungsform einer Sicherungsvorrichtung 55 in einer Fixierstellung 57 (Figur 3A), während der Schubkörper 11 sich in der Freilaufposition 3 befindet. Die bevorzugte Sicherungsvorrichtung 55 umfasst zwei am Schubkörper 11 verschwenkbar befestigte Greifer 59, 61, welche in der Fixierstellung 57 in Ausnehmungen 63, 65 (nicht dargestellt) des Rahmens 35 eingreifen. In der Freilaufposition 3 werden die beiden Greifer 59, 61 von einer Greifer-Zugfeder 67 vorgespannt, um zu verhindern, dass die Greifer den Kontakt zu den Ausnehmungen 63, 65 verlieren und der Schubkörper 11 sich aus der Freilaufposition 3 in die Bremsposition 37 verschiebt. In der Figur 3B wird die bevorzugte Sicherungsvorrichtung 55 gezeigt, nachdem der Fahrer den Bremsvorgang ausgelöst hat. Durch Aktivierung des Bremssystems werden die beiden Greifer 59, 61 entgegen der vorgespannten Greifer-Zugfeder 67 aus der Fixierstellung 57 gelöst, sodass sie keinen Kontakt mehr mit den Ausnehmungen 63, 65 des Rahmens 35 haben. Anschliessend kann der Schubkörper 11 entlang der Linearführung 9 aus der Freilaufposition 3 in die Bremsposition 37 gezogen werden (Figur 3C). Dazu muss der Schubkörper 11, eine an ihm befestigte und vorgespannte Schubkörper-Zugfeder 69 weiterspannen. Wenn der Fahrer den Bremsvorgang beendet, zieht die Schubkörper-Zugfeder 69 den Schubkörper 11 aus der Bremsposition 37 in die Freilaufposition 3 zurück (Figur 3B) und die Greifer-Zugfeder 67 bringt die beiden Greifer 59, 61 zurück in die Fixierstellung 57, in welcher die Greifer 59, 61 in die Ausnehmungen 63, 65 des Rahmens 35 eingreifen (Figur 3A) . In einer weiteren bevorzugten Ausführungsform wird der Schubkörper 11 von zwei Greifer-Zugfedern in die Fixierstellung 57 gezogen. Zur Vereinfachung wurde in Figur 3C auf die Darstellung der zweiten Greifer-Zugfeder verzichtet.

In den Figuren 3A bis 3C ist weiter ersichtlich, dass der Schubkörper 11 eine gewisse Strecke entlang der Linearführung 9 aus der Freilaufposition 3 in die Bremsposition 37 zurücklegt. Diese Strecke definiert den Schwenkwinkel der beiden Rollenachsen 31, 33 (siehe Figur 2). Je länger die Strecke, desto grösser ist der resultierende Schwenkwinkel. Die Strecke wird durch eine am Rahmen 35 befestigte Querstrebe 71 definiert, welche einen Anschlag 73 umfasst. Wenn der Schubkörper 11 den Anschlag 73 an der Querstrebe 71 erreicht, sind die beiden Rollenachsen 31, 33 maximal verschwenkt und die maximal mögliche Bremswirkung wird erzielt. Die Querstrebe 71 kann an unterschiedlichen Positionen des Rahmens 35 befestigt werden, um die Bremswirkung ideal auf die zu bewältigende Fahrt abzustimmen.

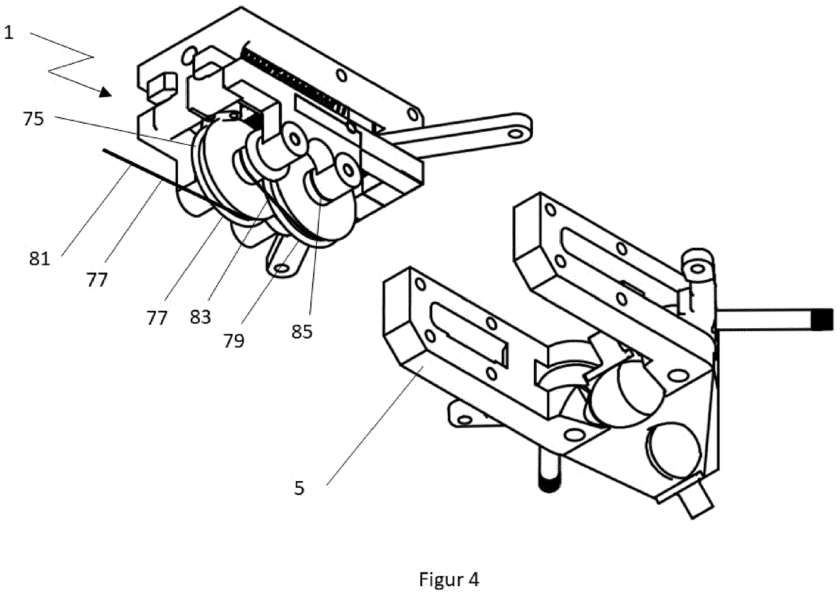

Die Figur 4 zeigt eine bevorzugte Ausführungsform eines Bremssystems 1, wobei in dieser Ansicht der Hauptkörper 5 und der Rahmen 35 auseinander gebaut wurden. Der Rahmen 35 weist eine Übersetzung 75 mit einem ersten Übersetzungsrad 77 und einem zweiten Übersetzungsrad 79 auf. Ein vom Fahrer betätigtes erstes Zugseil 81 ist am ersten Übersetzungsrad 77 befestigt. Wenn der Fahrer zur Auslösung des Bremssystems 1 das erste Zugseil 81 betätigt (mittels direkten Ziehens oder über einen Hebel), wird diese Bewegung an das erste Übersetzungsrad 77 abgegeben. Das erste Übersetzungsrad 77 ist über ein zweites Zugseil 83 mit dem zweiten Übersetzungsrad 79 verbunden. Alternativ könnten die beiden Übersetzungsräder auch mit einem Keilriemen oder direkt über Zahnräder verbunden sein. Die Bewegung des ersten Übersetzungsrads 77 wird somit an das zweite Übersetzungsrad 79 abgegeben, welches seinerseits wieder über ein drittes Zugseil 85 mit dem Schubkörper 11 verbunden ist (hier nicht ersichtlich) und diesen aus der Freilaufposition 3 in die Bremsposition 37 verschiebt.

## Patentansprüche

1. Bremssystem (1) für ein nicht motorisiertes Fahrzeug umfassend:
einen Hauptkörper (5) umfassend eine Hauptkörperebene,
eine Schubvorrichtung (7), umfassend einen geführten Schubkörper (11),
ein erstes und ein zweites Gelenk (19, 25),
wobei jedes Gelenk (19, 25) einen ersten Arm (21, 27) und
einen zweiten Arm (23, 29) umfasst, und
wobei der erste Arm (21, 27) einerseits parallel zur Hauptkörperebene schwenkbar mit dem Hauptkörper (5) verbunden ist und andererseits parallel zur Hauptkörperebene schwenkbar mit dem zweiten Arm (23, 29) verbunden ist, und der zweite Arm (23, 29) einerseits parallel zur Hauptkörperebene schwenkbar mit dem Schubkörper (11) verbunden ist und andererseits parallel zur Hauptkörperebene schwenkbar mit dem ersten Arm (21, 27) verbunden ist,
eine erste Rolle (13), welche um eine in der Hauptkörperebene liegende erste Rollenachse (31) drehbar gelagert ist und eine zweite Rolle (15), welche um eine in der Hauptkörperebene liegende zweite Rollenachse (33) drehbar gelagert ist, wobei die erste Rollenachse (31) mit dem ersten Arm (21) des ersten Gelenks (19) und die zweite Rollenachse (33) mit dem ersten Arm (27) des zweiten Gelenks (25) verbunden ist, und
wobei die Rollenachsen (31, 33) durch eine Schubbewegung des Schubkörpers (11) zwischen einer Freilaufposition (3) und einer Bremsposition (37) symmetrisch zueinander verschwenkbar sind.

2. Bremssystem gemäss Anspruch 1, **dadurch gekennzeichnet, dass** die Rollenachsen (31, 33) in Fahrtrichtung verschwenkt werden.

3. Bremssystem gemäss einem der Ansprüche 1 oder 2, **dadurch gekennzeichnet, dass** es sich bei der Schubbewegung des Schubkörpers (11) um eine manuelle Schubbewegung handelt.

4. Bremssystem gemäss einem der Ansprüche 1 bis 3, **dadurch gekennzeichnet, dass** das Bremssystem weiter ein Zugseil (77) umfasst, welches bevorzugt über eine Übersetzung (75), mit dem Schubkörper (11) verbunden ist, wobei der Schubkörper (11) mit dem Zugseil (77) aus der Freilaufposition (3) in die Bremsposition (37) bewegbar ist.

5. Bremssystem gemäss einem der Ansprüche 1 bis 4, **dadurch gekennzeichnet, dass** das Bremssystem weiter einen Rahmen (35) umfasst, der den geführten Schubkörper (11) umschliesst,
wobei der Schubkörper (11) eine Sicherungsvorrichtung (55) umfasst, welcher in einer Fixierstellung (57) den Schubkörper (11) in der Freilaufposition (3) lösbar im Rahmen (35) fixiert.

6. Bremssystem gemäss Anspruch 5, **dadurch gekennzeichnet, dass** die Sicherungsvorrichtung (55) mindestens einen Greifer (59), umfasst, welcher in der Fixierstellung (3) in den Rahmen (35) eingreift.

7. Bremssystem gemäss Anspruch 6, **dadurch gekennzeichnet, dass** der Greifer (59) in eine Ausnehmung (63) des Rahmens (35) eingreift.

8. Bremssystem gemäss einem der Ansprüche 6 oder 7, **dadurch gekennzeichnet, dass** der Greifer (59) mittels einer Greifer-Zugfeder (67) in der Fixierstellung (57) vorgespannt ist.

9. Bremssystem gemäss einem der Ansprüche 6 bis 8, **dadurch gekennzeichnet, dass** die Sicherungsvorrichtung (55) zwei Greifer (59) umfasst.

10. Bremssystem gemäss einem der Ansprüche 5 bis 9, **dadurch gekennzeichnet, dass** im Rahmen (35) mindestens eine Schubkörper-Zugfeder (69) angebracht ist, welche den Schubkörper (11) in der Freilaufposition (3) vorspannt.

11. Bremssystem gemäss einem der Ansprüche 5 bis 10, **dadurch gekennzeichnet, dass** der Rahmen (35) eine Querstrebe (71) umfasst, welche einen Anschlag (73) für den Schubkörper (11) definiert, sodass die Rollen (13, 15) aus der Freilaufposition (3) in die Bremsposition (37), um einen Schwenkwinkel von 5 - 85°, bevorzugt 30 - 60°, besonders bevorzugt 40 - 50° verschwenkbar sind.

12. Bremssystem gemäss einem der Ansprüche 1 bis 11, **dadurch gekennzeichnet, dass** der erste (21, 27) und der zweite Arm (23, 29) des ersten und des zweiten Gelenks (19, 25), jeweils ein erstes (39, 43, 47, 51) und ein zweites Ende (41, 45, 49, 53) aufweisen,
wobei das erste Ende (39, 47) des ersten Arms (21, 27) mit dem Hauptkörper (5) verbunden ist und das zweite Ende (41, 49) des ersten Arms (21, 27) mit dem ersten Ende (43, 51) des zweiten Arms (23, 29) verbunden ist und das zweite Ende (45, 53) des zweiten Arms (23, 29) mit dem Schubkörper (11) verbunden ist.

13. Bremssystem gemäss einem der Ansprüche 1 bis 12, **dadurch gekennzeichnet, dass** die Rollen (13, 15) aus einem Vollmaterial bestehen, und bevorzugt aus Polyurethan oder Kautschuk, besonders bevorzugt aus Polyurethan hergestellt sind.

14. Nicht-motorisiertes Fahrzeug umfassend ein Bremssystem gemäss einem der Ansprüche 1 bis 13,

15. Nicht-motorisiertes Fahrzeug gemäss Anspruch 14 **dadurch gekennzeichnet, dass** das nicht-motorisierte Fahrzeug ausgewählt ist aus der Gruppe bestehend aus aus Kickboard, Skateboard, Pedal-Gokart, Snakeboard, Longboard, Streetluge, 3-rädrige Scooter und Buttboard.
